Europäisches Patentamt

(19) European Patent Office

Office européen des brevets

(11) Publication number: **0 453 266 A1**

## (12) EUROPEAN PATENT APPLICATION

(21) Application number: **91303433.6**

(22) Date of filing: **17.04.91**

(51) Int. Cl.⁵: **F16B 13/14**

(30) Priority: **17.04.90 GB 9008573**

(43) Date of publication of application:
**23.10.91 Bulletin 91/43**

(84) Designated Contracting States:
**AT BE CH DE DK ES FR GB GR IT LI NL SE**

(71) Applicant: **THE RAWLPLUG COMPANY
LIMITED
Skibo Drive, Thornliebank Industrial Estate
Glasgow, G46 8JR (GB)**

(72) Inventor: **Wallace, Thomas Campbell
8 Ormande Avenue
Glasgow G44 3QX (GB)**

(74) Representative: **Pattullo, Norman et al
Ian G. Murgitroyd and Company Mitchell
House 333 Bath Street
Glasgow G2 4ER Scotland (GB)**

(54) **An anchoring system.**

(57)   An anchoring system comprising a tie rod (2) embedded in a hole (10) is described. The hole (10) contains a hardenable material (8) and the tie rod (2) has disposed around it an element (20) which presents an angled face with respect to the central axis of the tie rod (2). The arrangement is such that application of an axial withdrawal force to the tie rod (2) results in a proportion of the force being transferred laterally through the element (20) and the hardenable material (8) to the wall of the hole (10) when the hardenable material has cured.

FIG.1

EP 0 453 266 A1

This invention relates to an anchoring system.

When securing fixtures to a wall or other structure it is common practice to use a tie rod such as a bolt having a tapered end portion fitting partially within a segmented sleeve. The bolt and sleeve are inserted in a pre-drilled hole and the fixture is fitted over the exposed end of the bolt and held thereon by a nut. Tightening of the nut pulls the tapered section of the bolt further into the sleeve, forcing the segments radially outwardly against the bore wall to secure the assembly.

It has previously been proposed also to secure a fixture by embedding a tapered or non-tapered bolt in a pre-drilled hole containing a hardenable material such as a chemical cement, and then hardening the material to secure the bolt. When the bolt in such a system is tapered the hardenable material does not adhere to the bolt, and must be capable of splitting so as to provide a similar effect to that of the mechanical anchor described above when a withdrawal force is applied to the bolt.

According to one aspect of the present invention there is provided an anchoring system comprising a tie rod embedded in a hole containing a hardenable material, the tie rod having a first face disposed at an angle to the longitudinal axis of the tie rod and a second face disposed at an angle to the longitudinal axis, the first and second faces being displaced relative to each other along the axis.

According to a second aspect of the present invention there is provided an anchoring system comprising a tie rod embedded in a hole containing a hardenable material, the tie rod having a first face disposed at an angle to the longitudinal axis of the tie rod and the first face being in the form of a helix or a spiral.

The disposition of the first and second faces can be provided, for example, by a helical portion of the tie rod wherein the faces are angled respectively upwardly and downwardly.

The helix may be provided for example by machining from metal or by cold rolling, by twisting or by bending.

An advantage of using a helical form of tie rod is that it facilitates insertion of the bolt into hardenable material which is already contained in the hole. Further, insertion of the tie rod in a different manner, for example by a drilling machine, can provide mixing for the hardenable material. Alternatively the tie rod may be inserted into the hole before the hardenable material.

A similar effect to a helical disposition may be achieved by one or more planar first faces on the tie rod.

According to a third aspect of the invention an anchoring system is provided comprising a tie rod embedded in a hole containing hardenable material, at least part of the embedded portion of the tie rod being of non-circular cross-section.

By providing a non-circular cross-section for the tie rod the rod's resistance to rotation in the hardenable material is increased. This is of special significance when the tie rod is screw-threaded to receive a nut on its outer end.

The non-circular cross-section may be for example square, lobed, finned, elliptical, rectangular or some other non-uniform configuration.

The tie rod preferably has a portion which is tapered or which complies with the first or second aspects of this invention.

The non-uniform cross-section can provide lines or areas along which the hardenable material when cured is more likely to split to provide freedom for the cured material to move outwardly against the wall of the hole on increased loading, or movement, of the bolt. This can be of considerable significance for example when the anchoring system is in concrete which has cracked; the system then self-adjusts to adopt the profile of the hole which alters on cracking of the concrete.

It is preferable that the hardenable material be fireproof or fire-resistant, although any suitable Known form of hardenable material may suffice for the purpose of the invention.

According to a fourth aspect of the present invention there is provided an anchoring system of the first or second aspect of the invention in which the hardenable material contains or is replaced by particulate material.

The particulate material may be for example ball bearings and are of such nature and size as to provide a transfer of force from the tie rod laterally against the wall of the hole on application of an external axial force on the tie rod.

According to a fifth aspect of the present invention there is provided an anchoring system of the first or second aspect of the invention in which the tie rod has mechanical means which engages with the inner surface of the hole to resist extraction of the tie rod from the hole before hardening of the material.

Typically, the mechanical means could comprise an expandable sleeve or a clip which may be moveable on the tie rod to engage the inner surface of the hole.

The fourth and fifth features of the invention are especially useful as a temporary expedient in situations where the hardenable material does not cure rapidly. In such cases inclusion of the particulate material or provision of the mechanical means provides resistance to withdrawal of the tie rod from the hole on application of an axial force during the period in which the hardenable material is curing. This allows fixtures to be secured by means of the anchoring system immediately after its installation.

In certain applications it could be advantageous to combine the fourth and fifth aspects so that both mechanical means on the tie rod and the inclusion of a particulate material are combined.

If the hardenable material gels within a desirable short space of time to permit continuity in installation its strength may not be sufficient in a conventional bonding system to resist torqued loads. With the hybrid system, tests have shown that a gelled state sufficient to prevent the material flowing out of the gap between the rod expansive surfaces and the hole wall will sustain a torqued load. The ability to sustain ultimate failure and the development of the specified safety factor develop over the curing time of the hardenable material, which may be for example 24 hours in a resin system or 30 days in a hydraulic, cement based system.

In some forms of this invention it is desirable to have means of ensuring non-adhesion or low adhesion of the hardenable material to the rod. This ensures that loading on the rod will result in axial movement and because of the taper surfaces the generation of higher radial forces which will increase the pressure between the cast-in hardenable material plug and the base material in which the hole is formed. This results in a greater resistance to pull out. The action can be likened to that of a conventional mechanical anchor.

According to a sixth aspect of the invention there is provided an anchoring system comprising a tie rod embedded in a hole containing hardenable material, the tie rod having disposed around it an element presenting an angled face with respect to the central axis of the tie rod, the arrangement being such that application of an axial withdrawal force to the tie rod results in a proportion of said force being transferred laterally through the element and the hardenable material when cured to the wall of the hole.

The element may be for example a skirt or tapered sleeve of plastics material or metal. Alternatively an element having faces as defined in the first aspect of the invention with respect to the tie rod may be used.

According to a seventh aspect of the invention there is provided an anchoring system comprising an element, having a bore therein, embedded in cured hardenable material in a hole, the element being engaged by a tie rod inserted into the bore in a manner whereby the tie rod is secured to the element against withdrawal through corresponding profiles on the bore and the tie rod. The cured hardenable material may substantially fill the hole, with a sleeve or the like maintaining a clear passageway to the element for insertion of the tie rod. The element could be a nut or any other suitably profiled element, for example having any of the profiles mentioned in the previous aspects of the invention.

Embodiments of the invention will now be described by way of example with reference to the accompanying drawings in which:

Figs 1 to 8 are sectional schematic plan views of alternative forms of anchoring system in accordance with the present invention; and

Fig 9 (a) to (d) are cross-sectional end view of alternative profiles of the tie rod shown in Fig. 1.

In the drawings corresponding parts of the anchoring systems are designated by the same reference numerals in each Figure.

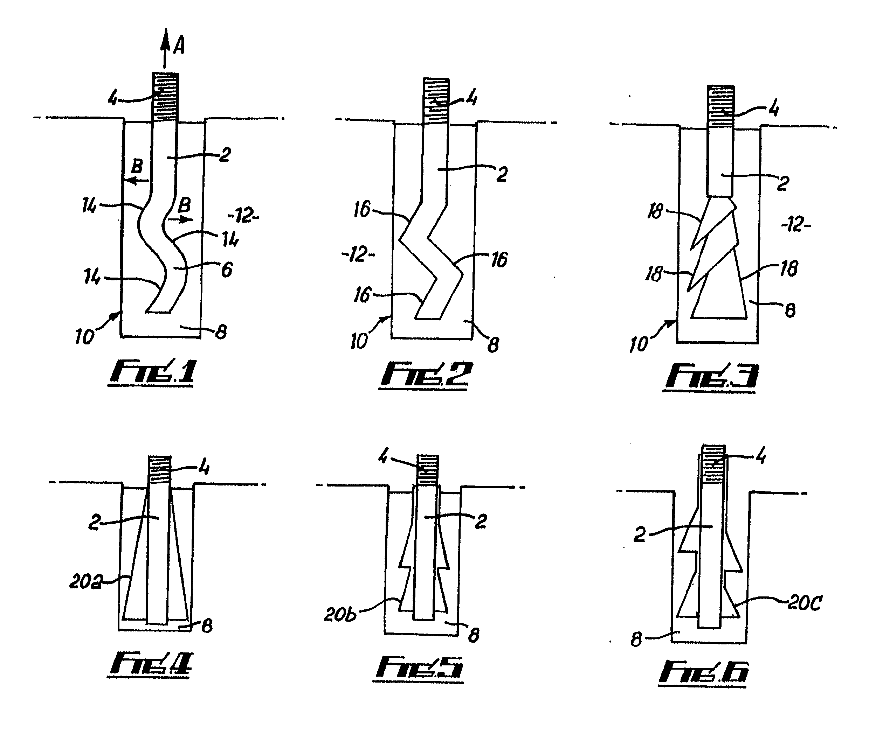

Referring first to Fig. 1, the system comprises a tie rod in the form of a bolt 2 which is screw-threaded at its outer end 4 and whose inner end is twisted into helical form 6. The bolt 2 is embedded in a hardenable material 8 which fills a pre-drilled hole 10 in a wall 12. The hardenable material 8 is uncured when the bolt 2 is inserted into it and is then cured to form a solid mass, either by natural curing or by application of an outside agency or effect. In the present embodiment of the invention the hardenable material is a synthetic resin cement but other materials may also be used. The cement is selected to be non-adhesive to the bolt 2, and the bolt 2 is coated with adhesion-resistant varnish.

After curing of the cement 8 the system resists withdrawal of the bolt 2 by virtue of the upwardly-angled faces 14 on the bolt; an axial withdrawal force in the direction 'A' on the bolt 2 induces a radial force in the directions 'B' through the cement 8 to the wall of the hole 10, and this causes cracking of the cement 8 into a series of serpents each of which is forced radially outwardly by the action of the faces 14. The bolt 2 is thus wedged ever more tightly within the hole 10.

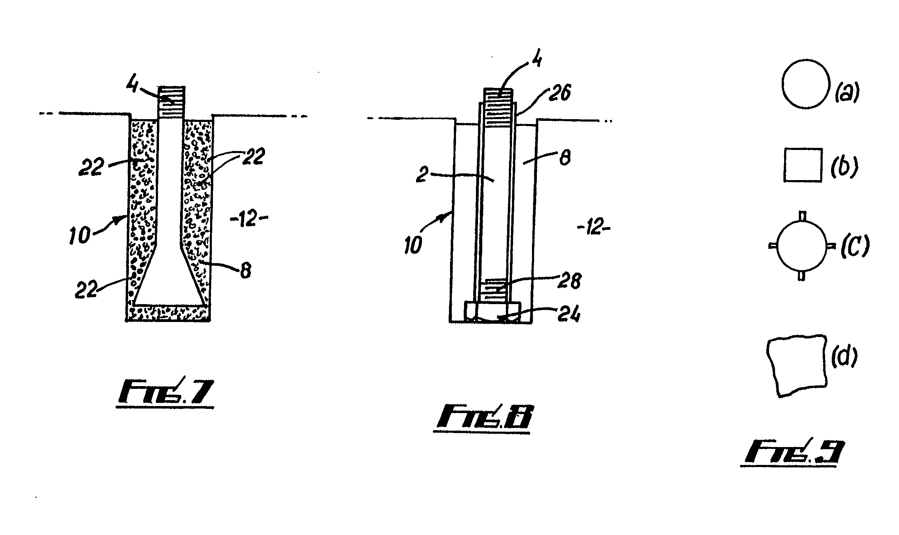

In Figs 2 and 3 a similar situation exists. Fig. 2 illustrates the bolt 2 having a series of planar angled faces 16 instead of the helical face 14 of Fig. 1, whereas in Fig. 3 a helical face 18 is produced by cold rolling the metal of the bolt 2.

In Figs 4, 5 and 6 the resistance to withdrawal is achieved by a similar principle of radial force generation; in these cases the bolt 2 is of conventional form but has around it a sleeve or skirt 20(a), 20(b), 20(c). The entire space between the bolt 2 and the skirt 20, and between the skirt 20 and the wall of the hole 10, is filled with the cured cement and either the skirt 20 is secured to the bolt 2 or the bolt 2 is adhered to the cement.

The skirts 20(a), 20(b) and 20(c) are respectively tapered uniformly, tapered in steps, and helically tapered.

In Fig. 7 the bolt has a uniform taper and the cement 8 contains particles in the form of small ball bearings 22. While the cement 8 is in an uncured form, for example in the period immediately after insertion of the bolt 2, the ball bearings 22 serve to provide the desired radial force to resist bolt withdrawal while the cement is curing. This allows a fixture to be fitted over the threaded end 4 of the bolt 2 and tightened thereon by a nut without the operator having to wait until the cement has hardened.

In Fig. 8 a nut 24 is secured at the base of the hole 10 by embedment in the cement 8, and a sleeve 26 extends upwardly through the hole 10 to provide a barrier to passage of the cement 8. The bolt 2, screw-threaded at its inner end at 28, can thus be passed through the sleeve 26 to engage with the nut 24.

The nut 24 could be replaced by an element having a tapered cross-section similar to the tapered section on the tie rod 2 shown in Fig. 7 and a threaded bore in the centre of the element replacing the thread 4 on the outside of the tie rod. Similarly, the element could have any of the profiles shown in Figs. 1 to 3 or be used in conjunction with one of the sleeves shown in Figs. 4 to 6.

The advantage of the type of fixing described above in Fig. 8 is that if damage occurs to a fixture attached to the tie rod 2 by the thread 4, for example by a sudden impact, then if the tie rod 2 is damaged it can be removed from the nut 24 and replaced with an undamaged tie rod 2. This avoids the need to remove the entire fixing and relocate it with a new fixing. This is particularly advantageous when installing items which are prone to damage, such as road crash barriers.

Figs 9 and 12 show alternative cross-sectional profiles of the bolt 2 being respectively circular, square finned and lobed. Those of Figs 10, 11 and 12 are effective in resisting rotation of the bolt 2 on application of torque on a nut applied to the bolt's outer end 4.

Modifications and improvements may be incorporated without departing from the scope of the invention.

## Claims

1. An anchoring system comprising a tie rod (2) embedded in a hole (10) containing a hardenable material (8), the tie rod (2) having a first face (16) disposed at an angle to the longitudinal axis of the tie rod (2) and a second face (16) disposed at an angle to the longitudinal axis, the first and second faces (16) being displaced relative to each other along the axis.

2. An anchoring system comprising a tie rod (2) embedded in a hole (10) containing a hardenable material (8), the tie rod (2) having a first face (14) disposed at an angle to the longitudinal axis of the tie rod (2) and the first face (14) being in the form of a helix or a spiral.

3. An anchoring system comprising a tie rod (2) embedded in a hole (10) containing hardenable material (8), at least part of the embedded portion of the tie rod (2) being of non-circular cross-section.

4. An anchoring system according to Claim 3, wherein the rod (2) also includes a first face (16) and a second face (16) in accordance with Claim 1 or a first face (14) in accordance with Claim 2.

5. An anchoring system comprising a tie rod (2) embedded in a hole (10) containing hardenable material (8), the tie rod (2) having disposed around it an element (20) presenting an angled face with respect to the central axis of the tie rod (2), the arrangement being such that application of an axial withdrawal force to the tie rod (2) results in a proportion of said force being transferred laterally through the element (20) and the hardenable material (8) when cured to the wall of the hole (10).

6. An anchoring system comprising an element (24), having a bore therein, embedded in cured hardenable material (8) in a hole (10), the element (24) being engaged by a tie rod (2) inserted into the bore in a manner whereby the tie rod (2) is secured to the element (24) against withdrawal through corresponding profiles (28) on the bore and the tie rod.

7. An anchoring system according to any of the preceding claims, wherein the hardenable material (8) comprises a particulate material.

8. An anchoring system according to Claim 7, wherein the particulate material comprises substantially spherical members (22).

9. An anchoring system according to any of the preceding Claims, wherein the tie rod (2) further comprises mechanical means which engages with an inner surface of the hole (10) to resist extraction of the tie rod (2) from the hole (10) before hardening of the material (8).

10. An anchoring system according to Claim 9 wherein the mechanical means comprises an expandable member.

Fig.1

Fig.2

Fig.3

Fig.4

Fig.5

Fig.6

FIG.7

FIG.8

(a)

(b)

(C)

(d)

FIG.9

EP 0 453 266 A1

European Patent Office

**EUROPEAN SEARCH REPORT**

Application Number

EP 91 30 3433

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 604 378 (A. FISCHER) <br> * page 4, lines 1-4; figure 1 * <br> --- | 1 | F 16 B 13/14 |
| X | BE-A- 764 965 (IMPERIAL CHEMICAL IND.) <br> * page 9, lines 12-16; figure 1 * <br> --- | 2,5 | |
| X <br> A | EP-A-0 348 545 (R. SELL) <br> * claim 1; figure 1 * <br><br> --- | 3,4 <br><br> 7,8 | |
| X | DE-U-8 703 774 (O. MAYER) <br> * page 12, lines 21-32; figures 8,9 * <br> --- | 6 | |
| A | DE-A-3 325 800 (H. LIEBIG) <br> * page 15, lines 11-29; figures 2,3 * <br> ----- | 6,9,10 | |

TECHNICAL FIELDS SEARCHED (Int. Cl.5)

F 16 B

The present search report has been drawn up for all claims

| Place of search | Date of completion of the search | Examiner |
|---|---|---|
| BERLIN | 24-07-1991 | WESTERMAYER W G |